# EUROPEAN PATENT SPECIFICATION

(11) **EP 3 026 308 B1**
(45) Date of publication and mention of the grant of the patent: **23.05.2018**
(21) Application number: 15196367.5
(22) Date of filing: 25.11.2015
(51) Int. Cl.: F16K 11/078, F16K 27/12

(54) **A TAP FOR SANITARY APPLIANCES**
WASSERHAHN
ROBINET

(30) Priority: 25.11.2014 IT MI20142026
(43) Date of publication of application: 01.06.2016
(73) Proprietor: Marco Mammoliti S.p.A., 11100 Aosta (IT)
(72) Inventor: CRISTOFARO, Antonio, 11100 Aosta (IT)
(74) Representative: Tansini, Elio Fabrizio

(56) References cited:
- US-A- 1 499 562
- US-A- 4 887 642
- US-A- 6 062 251

## Description

The present invention relates to a tap for sanitary appliances and a relative tap kit for sanitary appliances.

In particular, the present invention relates to a tap and a relative kit for sanitary appliances destined for domestic/private use such as a bathroom, a kitchen, a laundry or for civil use as sanitary appliances for a hotel or a restaurant. Further, the tap for sanitary appliances and the relative kit according to the present invention is effectively applicable for combining with sanitary appliances such as small washing basins or sinks installed on-board yachts and cruising ships, sleeper wagons for trains, passenger aircraft, luxury motorhomes and like means.

Therefore, the present invention relates to a tap for sanitary appliances and a relative kit predisposed to control and regulate dispensing of a fluid such as hot or cold water for a sanitary appliance, as described in the foregoing.

The traditional tap, in the prior art, is made up of a few components, in general a main body provided with an inlet end connected to a water delivery conduit and an outlet end of the water towards the outside and a regulating valve arranged internally of the above-mentioned main body and configured so as to increase/decrease the water passage opening.

It is known that the activation of the tap by a user is done by acting on a handle or knob which is generally connected, directly, to the stem of the regulating valve.

The knob is usually rotatable with respect to the main body by means of a mechanical coupling or respective threaded portions so as to enable precisely controlling the position of the stem of the regulating valve and of maintaining that position (tap open with constant flow of water) according to the user's needs. For example, by way of illustration, a traditional tap is described in document US2895708. This type of tap is generally used for only one type of water delivery conduit, so in the case of a shower or bathtub that dispense hot and cold water the use of a specific tap for dispensing hot water and cold water is indispensable.

A further example, which might be regarded as a technical evolution of the preceding example, as illustrated in document US1212806 relates to a tap configured so as to control dispensing hot and cold water and therefore to manage the mixing thereof in order to send a single flow of premixed water towards the outlet conduit, by means of a few user movements on the respective regulating valves of the water flow.

More recently the tap for sanitary appliances has assumed a configuration that makes it more flexible in applications as well as more practical to use. In fact, the command knob is one only and enables both opening/closing of the water delivery and the mixing of hot and cold water as desired according to the user's needs. This result has been reached by use of a particular type of known valve, known in jargon as a cartridge or a cartridge body. The tap itself is also known in jargon as a mixer tap.

The mixer tap is activatable by a single knob to which two movements can be imparted, rotary and/or translating, about two axes that are perpendicular to one another. A first axis is for rotation of the knob to enable opening/closing and adjustment of the water flow, while a second axis, generally perpendicular to the first, enables a desired mixing between the hot water and the cold water. An example of an embodiment of the tap described above is illustrated by way of example in document US3030980. It is clear from the prior art that the tap for sanitary appliances is a product which in a single solution gathers together several characteristics with the aim of attaining a greater practicality and precision of functioning together with requisites of a graphic type and aesthetic type as presented to the user's view, all these being features which nowadays are of absolute priority and are linked to one another.

In other terms, a user regarding a particularly refined tap with certain graphic, finishing, shape and ergonomics requisites may perceive this particular tap as more refined, more usable and possessing technical characteristics (for example the seal, the slidability of the knob and the like) that are of higher quality with respect to a traditional tap model. Further, when the need arises to renovate a room, public or private, which includes sanitary appliances, such as a bathroom or in a toilet/cabin of a business jet, often there is a requirement to completely replace the sanitary appliances too and especially the taps installed on them.

However, the obsolescence of the characteristics of graphic presentation, shape and ergonomics of the taps already installed on the sanitary appliances is certainly not on a level with the technical functioning characteristics, such as, for example, seal capacity, precision, resistance to wear, pressure leaps in the pipes and supply lines and the like which might still be perfectly valid for a normal functioning of the known tap. There is substantially a phenomenon of early obsolescence of tap products for sanitary appliances, more greatly induced by reasons of practicality, shape and functionality rather than by any effective mechanical and performance deterioration.

The replacement of the tap(s) in their entirety disadvantageously leads to high costs, also because it includes the replacement of connection accessories of the delivery system and especially various hours of labour in order to effect the replacement.

A tap for sanitary appliances according to the preamble of claim 1 is known from US1499562A.

An aim of the present invention is to obviate one or more of the problems encountered in the prior art by disclosing a tap for sanitary appliances and a relative kit which are free of the above-described deficiencies.

Therefore, an aim of the present invention is to provide a tap for sanitary appliances and a relative kit which enable a more flexible, comfortable and precise use, respecting specific requisites of presentation, finishing and ergonomics which give the tap greater added value, with the ability to enhance the context in which it is inserted and the accessories dedicated to it, and a better practicality and visual presentation to the user.

A further aim of the present invention is to provide a tap for sanitary appliances and a relative kit which enable a simple and rapid replacement of the elements subject to wear and deterioration by means of a simple and rapid system of demounting of the tap from the sanitary appliance.

A further and different aim of the present invention is to provide a tap for sanitary appliances and a relative kit which are easily convertible and adaptable to all the finishing and practicality requirements of the user, reducing the costs of the operation with respect to what is known in terms of time and cost for the purchasing of further elements and accessories necessary for mounting the tap.

Further characteristics and advantages will become more apparent from the detailed description of some non-exclusive embodiments of a tap for sanitary appliances and a relative kit according to the present invention. This description is provided with reference to the accompanying figures, which are also provided purely by way of illustrative and thus non-limiting example, of which:
- figure 1 is a perspective view of a tap for sanitary appliances according to the present invention;
- figure 2 is a schematic sectional view of the tap of figure 1;
- figure 2A is a detailed view of section of the tap of figure 2;
- figure 3 is a schematic lateral view of a detail of the tap of figure 1, with some parts removed better to evidence others that are not otherwise visible;
- figure 3A is a detailed view of a section in plan view of a detail of the tap of figure 3.

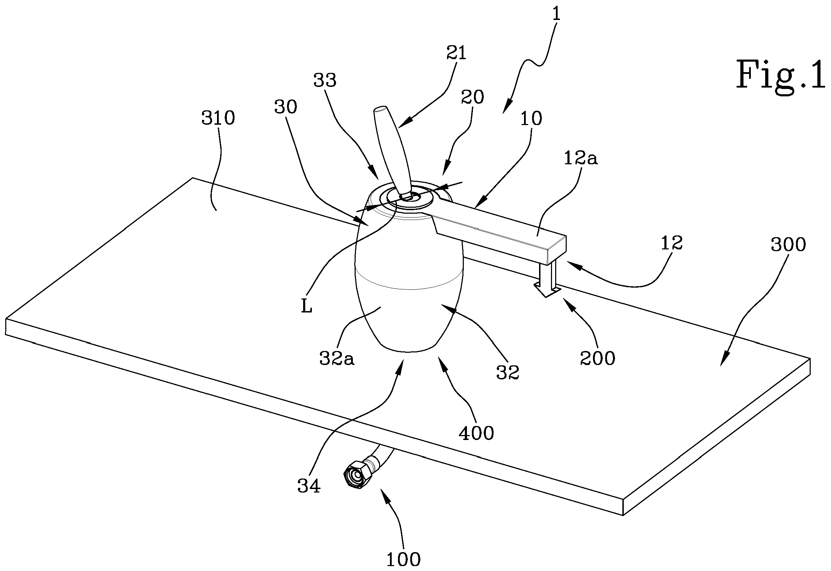

In appended figures 1-3A, a preferred embodiment of a tap 1 for sanitary appliances is illustrated by way of non-limiting example, according to the inventive concept of the present invention.

The tap 1 of the present invention is predisposed to be connected to a supply conduit 100 for enabling use of a fluid 200 in a sanitary appliance 300, as schematically illustrated in the appended figures.

In accordance with the technical scope that the present invention belongs to, the above-mentioned fluid 200 is to be taken to be water, hot or cold, of a hydraulic plant. Therefore, during the course of the description the general term fluid 200 could be interchanged with the more specific terms of water 200 and vice versa, without limiting the inventive concept of the present invention.

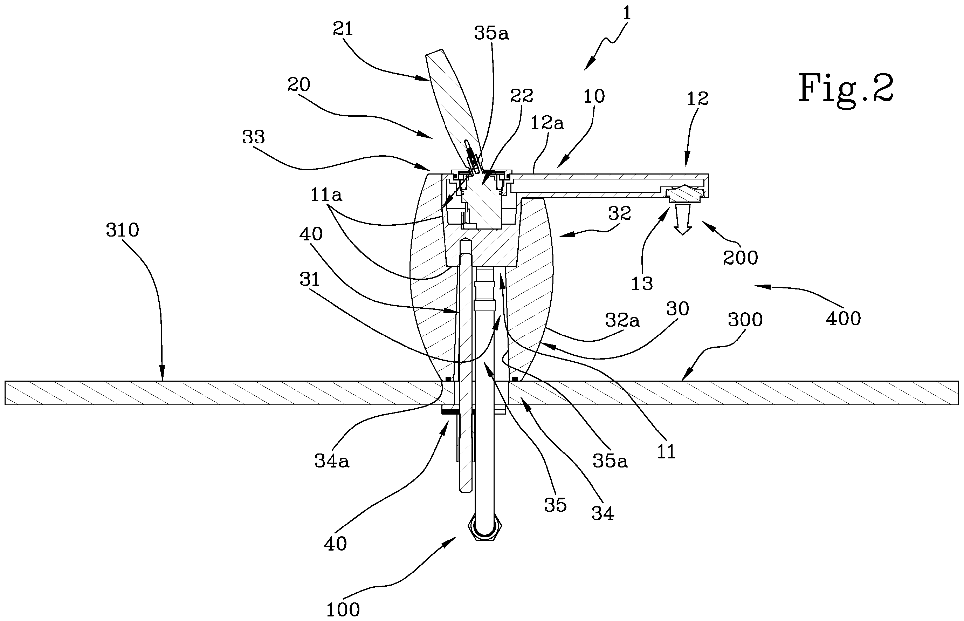

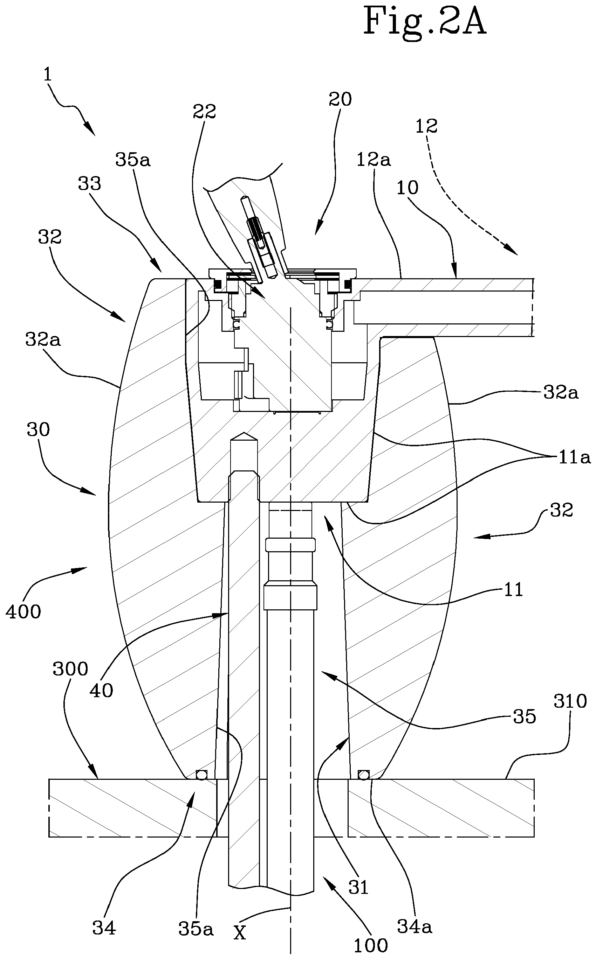

In particular, with particular reference to appended figure 2 the tap 1 comprises at least a dispensing body 10 provided with a first end 11 proximal with respect to a supply conduit 100 and a second end 12 distal with respect to the above-mentioned supply conduit 100.

The first end 11 of the dispensing body 10 is able to realise a reversible fluid connection 200 with the supply conduit 100, by way of example using threaded means, not illustrated, suitable for guaranteeing the mechanical and hydraulic seal of the connection.

The second end 12 of the dispensing body 10, in communication with the fluid 200 with the first end 11, is configured so as to enable the outlet of the fluid 200 from the tap 1.

The second end 12 is distal with respect to the supply conduit 100 and is profiled so as to be able to house an aerator/atomiser 13 of the flow of fluid 200 fixed to the outlet of the tap 1.

However, it should be specified that the structure of the dispensing body 10 can be of any type whatsoever in accordance with the various envisaged types of dispensing. For example, in an alternative embodiment not illustrated in the figures, the dispensing body 10 can be provided with an upper groove (fashioned on the surface and externally on-view), for supplying water in a "cascade" configuration.

In an operative use configuration of the tap 1, the dispensing body 10 preferably has a surface portion 12a exposed to the outside 400, i.e. to the view of a user in particular at the second end 12.

The dispensing body 10 at the first end 11 preferably has a surface portion 11a configured for enabling connection with the supply conduit 100.

In an operative use configuration of the tap 1, the above-mentioned surface portion 11a is at least partly hidden from the view of the user, and faces a fixing surface 310 of a sanitary appliance 300. In other words, the cladding element 30 is configured for realising the mechanical/structural connection between the dispensing body 10 and the sanitary appliance 300.

In a different solution falling within the concept of the present invention, not illustrated in the appended figures, the surface portion 11a abuts directly with a fixing surface 310 of a sanitary appliance 300. In other terms the dispensing body 10 is flanked to the surface 310 of the sanitary appliance 300, and is preferably directly installed thereon and is connected to the supply conduit 100.

The tap 1 further comprises command means 20 operatively associated to said dispensing body 10 and configured such as to open/close passage of the fluid 200 from said first end 11 to said second end 12 of said dispensing body 10. The command means 20 comprise at least a lever 21 for activating a valve so as to take the tap 1 from a configuration in which the fluid 200 flows from the first end 11 to the second outlet end 12 to a configuration in which the flow of the fluid 200 is suspended, and vice versa, from the first end 11 to the second end 12. By way of example, the command means 20 comprising a lever 21 are illustrated in appended figures 1-3A.

The tap 1 of the present invention preferably comprises a cartridge body 22 operatively associated to the lever 21 and such as also to enable the opening/closing of the tap 1 and the selection between a supply conduit 100 of the cold water and a supply conduit 100 of the hot water (not specifically distinguished in the appended figures).

The cartridge body 22 is configured to enable selection/mixing of the hot and cold water 200, in both a passage configuration of the water 200 from the first end 11 to the second end 12 (i.e. in an operative use condition of the tap 1) and to enable suspension of the flow of water 200 from the first end 11 to the second end 12.

The tap 1 comprises a cladding element 30 operatively associated to the dispensing body 10 and/or the command means 20, in an operative use configuration of the tap 1.

The tap 1 comprises engaging means 40 that are such as to realize a reversible connection between the cladding element 30 and the dispensing body 10, as illustrated by way of example in figure 2. The engaging means 40 comprise a threaded or studded bar screwed into the dispensing body 10 and a threaded washer screwable on the threaded bar so as to exert an opposing force on a portion of the sanitary appliance 300 in order to realise a pressure and maintain the coupling between the dispensing body 10 and the cladding element 30.

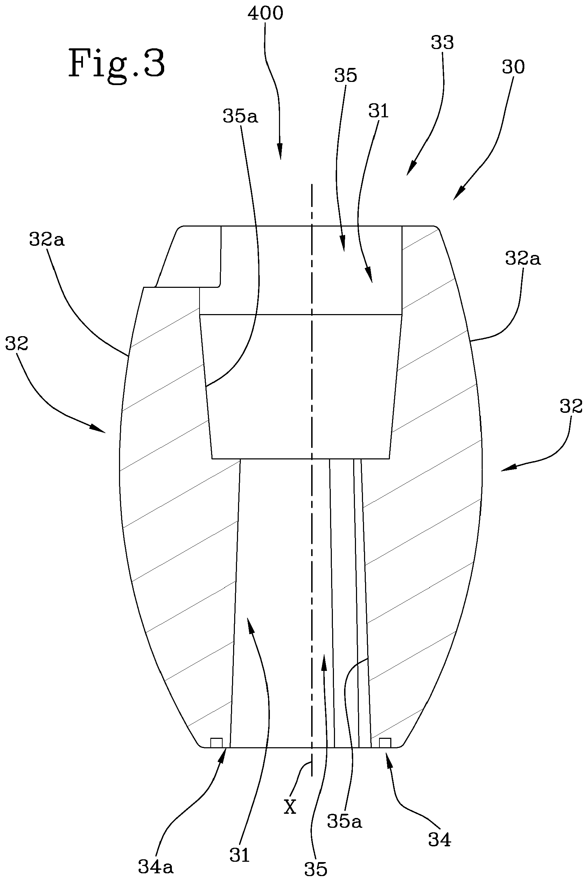

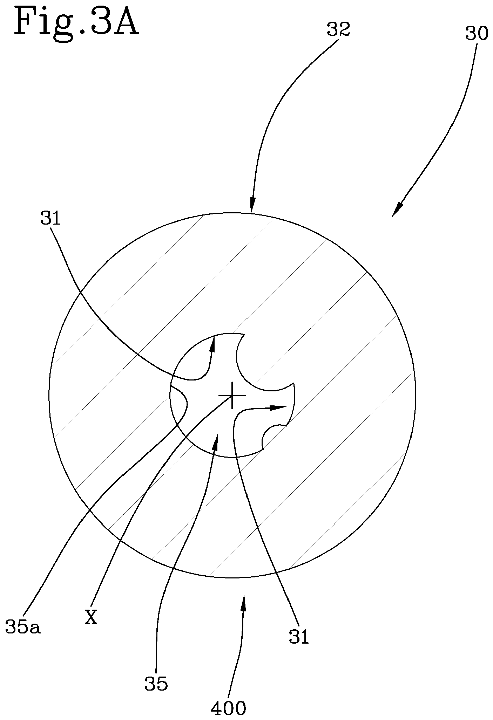

The cladding element 30 is preferably such as to extend between a head end 33 and a base end 34, along a development axis X, as illustrated by way of example in appended figure 3. In particular, by way of non-limiting example, the cladding element 30 has an axial symmetric shape determined by the revolution of a closed section about the development axis X. The form of the lines defining the closed section determines, by means of a revolution thereof about the axis X, the overall shape of the cladding element 30.

In general and non-limiting terms, the cladding element 30 has a prevalent development direction so as to exhibit an extension such as to at least partly cover the dispensing body 10.

The cladding element 30 can have shapes and features that are different; therefore in the appended figures reference is made to a preferred but not limiting embodiment of the cladding element 30 and the tap 1.

The cladding element 30 has an internal cavity 35 suitable for at least partly receiving the dispensing body 10, in an operative use configuration of the tap 1.

The internal cavity 35 of the cladding element 30 has a surface 35a defining the cavity 35.

The internal cavity 35 is open towards the outside 400; preferably the cavity 35 is open towards the outside 400 respectively at the base end 34 and the head end 33 of the cladding element 30 such as to realise respective passages of the cavity 35 through the cladding element 30. The cladding element 30 comprises a first portion 31 of the cladding element 30 and a second portion 32 defined by the presence of the cavity 35 which enables precisely subdividing the cladding element 30 into the two portions 31, 32 which make it up.

In an operative use configuration of the tap 1, the first cladding portion 31 is not exposed to the outside 400, i.e. is not exposed to the view of a user and is suitable for entering into contact at least partly with the respective surface 11a of the first end 11 of the dispensing body 10.

The first portion 31 preferably comprises a portion of the surface 35a of the internal cavity 35 of the cladding element 30.

In particular, the surface 35a of the cavity 35 is operatively associated to a respective surface 11a of the first end 11 of the dispensing element 10.

In an operative use configuration of the tap 1, the cladding element 30 is configured such as to give greater rigidity between the first end 11 and said second end 12 of the dispensing body 10. In particular, the first portion 31 of the cladding element 30 is operatively associated to a respective surface 11a of the dispensing body 10 so as at least partly to cover it.

The second portion 32 is configured such as to realise a connecting portion at least partly between the first end 11 and the second end 12 of the dispensing body 10. By connecting portion is meant the portion of the cladding element 30 suitable for mechanically toughening the dispensing body 10 and/or giving a predetermined connection form between the first end 11 and the second end 12 of the dispensing body 10.

The second portion 32 comprises an external surface 32a exhibiting a graphic motif and/or a cladding material having predetermined characteristics of colour and/or finishing and/or ribbing, gullies or other characteristics suitable for making the above-mentioned portion sturdier and for giving a predetermined visual impact at the same time.

In an operative use configuration of the tap 1, the cladding element 30 preferably comprises an abutment surface 34a at the base end 34 suitable for facing the surface 310 of the sanitary appliance 300, still more preferably for abutting the surface 310 of the sanitary appliance 300. The cladding element preferably comprises seal means, such as for example an O-ring, arranged in a respective seating afforded on the abutment surface 34a and active in an operative configuration of the tap 1 when it is installed and fixed to the surface 310 of the sanitary appliance 300.

The cladding element 30 optionally has a through-hole, not illustrated, separate and not communicating with the internal cavity 35, directed parallel to the axis "X", so as to enable the passage of a supply conduit 100.

The cladding element 30 of the tap 1 is advantageously reversibly removable from the dispensing body 10, substantially freeing the dispensing body 10 from the contact/enveloping of the cladding element 30 coupled thereto.

In accordance with a preferred embodiment of the present invention, the reversible removal/installation of cladding element 30 from/to the dispensing body 10 of the tap 1 is achieved by a movement of de-insertion/insertion of the dispensing body 10 through the internal cavity 35.

The reversible removal/installation of the cladding element 30 from the dispensing body 10 of the tap 1 preferably occurs by a loosening/closing of the engaging means 40 of the tap 1.

Therefore, for the mounting of the tap 1 to the supply conduit of the water 100 and/or of the sanitary appliance 300, a step is included of installation of the dispensing body 10, by means of axial insertion thereof along the development axis "X" of the cladding element 30, enabling coupling between the dispensing body 10 and the cladding element 30 and a following step of fixing the tap 1 on the surface 310 of the sanitary appliance 300 which comprises closing the engaging means 40.

Vice versa, for removing the cladding element 30 from the dispensing body 10 of the tap 1, a step of demounting the tap 1 from the sanitary appliance 300 is included, which comprises loosening the engaging means 40 and a following step of removal of the cladding element 30 from the dispensing body 10 of the tap 1 or vice versa.

In a different embodiment of the tap 1 according to the present invention, not illustrated in the appended figures, the cladding element 30 is reversibly removable from the dispensing body 10 with the dispensing body 10 already connected to the supply conduit 100 and/or fixed to the surface 310 of the sanitary appliance 300.

In particular, the cladding element 30 of the tap 1 has the internal cavity 35 open towards the outside 400 with a width equal to a width L of the dispensing body 10 (see appended figure 1) and extending from the head 33 end of the base end 34 of the cladding element 30.

In other terms, the internal cavity 35 of the cladding element 30 has a slit shape having a width equal to the maximum width L of the dispensing body 10 and extends over the whole longitudinal development of the cladding element 30.

In this embodiment too, the reversible removal/installation of the cladding element 30 from the dispensing body 10 of the tap 1 preferably occurs by a loosening/closing of the engaging means 40 of the tap 1.

Therefore, during an installation step of the cladding element 30 to the dispensing body 10, a step of lateral insertion of the cladding element 30 on the dispensing body 10 is included, through the lateral slit which opens the internal cavity 35 and, preferably, a subsequent step of closing the engaging means 40.

In accordance with the inventive concept of the present invention, a kit for a tap 1 for sanitary appliances 300 is defined, comprising a cladding element 30 operatively associable to the dispensing body 10 and reversibly removable from the dispensing body 10.

The first portion 31 of the cladding element 30 is able to face, preferably abut, at least partially on a respective portion 11a of the dispensing body 10 and a second portion 32 is configured such as to give greater rigidity between the first end 11 the said second end 12 of the dispensing body 10 in an operative use configuration of the tap 1.

The kit for a tap 1 preferably comprises engaging means 40 that are such as to realize a reversible connection between the cladding element 30 and the dispensing body 10 in an operative use configuration of the tap 1.

By way of example, the engaging means 40 comprise threaded means and/or jointing means and/or magnetic means.

In a different solution for the kit for a tap 1 for sanitary appliances 300, the kit for a tap 1 comprises a cladding element 30 and a dispensing body 10 associable to one another. In other terms, a kit for a tap 1 comprises both the body of the tap 1, i.e. the dispensing body 10, and the cladding thereof, i.e. the cladding element 30. In this case an obsolete tap already installed on the sanitary appliance is completely replaceable by means of the kit for a tap 1 for sanitary appliances 300 according to the present invention.

In a different solution for the kit for a tap 1 for sanitary appliances 300, the kit for a tap 1 comprises a cladding elements 30. In other words, the kit for the tap 1 enables replacing a cladding of the tap 1 body by means of the reversible removal/installation of the cladding element 30 from the dispensing body 10 of the tap 1.

In a further and different solution for the kit for a tap 1 for sanitary appliances 300, the kit for a tap 1 comprises a plurality of cladding elements 30. In other terms, the kit for a tap 1 comprises a plurality of cladding elements 30 that are different to one another by shape and/or surface finish and/or manufacturing materials. The plurality of cladding elements 30 are associable to the dispensing body 10 of the tap 1 by means, preferably, of the above-mentioned engaging means 40, in a plurality of combinations and solutions suitable for corresponding to various requisites of shape, surface finishing and rigidity of the tap 1.

The above described solutions of kits for a tap 1 for sanitary appliances 300 advantageously enables cladding and giving mechanical rigidity to the dispensing body 10 of the tap 1, having multiple solutions in regard to shape, ergonomics and finishing, preferably comprising the tap models present on the market in the prior art.

The present invention has achieved the intended aims.

The tap for sanitary appliances of the present invention advantageously enables a use that is more flexible, comfortable and precise, while respecting specific requisites of presentation, finishing and ergonomics.

Given a same weight as a tap assembly of the known type, the tap for sanitary appliances of the present invention is advantageously sturdier and more rigid and enables having novel shapes and/or dimensions and/or large distances between the first, mounting end and the second, dispensing end of the water with respect to the prior art.

This structural advantage further enables obtaining a tap with a surface finishing that is always up to date with the technical/aesthetic requisites demanded by the market and is always compliant with the technical requirements needed.

The kit for a tap for sanitary appliances of the present invention advantageously enables, in a simple and non-invasive way, to update a tap with a rapid replacement of the rigid and cladding part, which with a traditional tap is not possible.

## Claims

1. A tap (1) for sanitary appliances (300) comprising:
- a dispensing body (10) provided with a first end (11) proximal with respect to a supply conduit (100) and suitable for realising a fluid connection (200) therewith and a second end (12) distal with respect to said supply conduit (100) and configured such as to realise an outlet of said fluid (200) and wherein said second end (12) is in fluid communication with said first end (11),
- command means (20) operatively associated to said dispensing body (10) and configured such as to open/close passage of said fluid (200) from said first end (11) to said second end (12) of said dispensing body (10);
- a cladding element (30) operatively associated to said dispensing body (10) and reversibly removable from said dispensing body (10) in which a first portion (31) of said cladding element (30) is suitable for facing, preferably at least partially abutting on, said dispensing body (10) and a second portion (32) is configured so as to realize a connecting portion extending at least partially between said first end (11) and said second end (12) of said dispensing body (10);
- engaging means (40) such as to enable a reversible connection between said cladding element (30) and said dispensing body (10), and vice versa into an operative use configuration of said tap (1), wherein said cladding element (30) being such as to extend between a head end (33) and a base end (34) and wherein said cladding element (30) exhibiting an internal cavity (35) able to at least partially receive said dispensing body (10) in an operative use configuration of said tap (1); said cavity (35) exhibiting a surface (35a) operatively associated with a respective surface (11a) of said first end (11) of said dispensing element (10) and wherein said cladding element (30) exhibiting an abutment surface (34a) of said base end (34) suitable for abutting on a surface (310) of a sanitary appliance (300);
**characterised in that** the engaging means (40) comprises a threaded or studded bar screwed into the dispensing body (10) and a threaded washer screwable on the threaded bar for exerting an opposing force on the sanitary appliance (300) to realise a pressure and maintain the coupling between the dispensing body (10) and the cladding element (30).

2. The tap (1) according to claim 1, wherein said cavity (35) is open towards the outside (400) respectively at said base end (34) and said head end (33) of the cladding element (30) such as to realise respective passages of said cavity (35) through said cladding element (30).

3. The tap (1) according to claim 1, wherein said cavity (35) of the cladding element (30) is open towards the outside (400) in a region comprised between said base end (34) and said head end (33), said cavity (35) preferably exhibiting an opening towards the outside (400) having a width equal to a width ("L") of said dispensing body (10) and extending preferably from said head end (33) to said base end (34) of the cladding element (30).

4. The tap (1) according to any of the preceding claims, wherein said cladding element (30) exhibits at least a through-hole that is separate and non-communicating with said internal cavity (35) such as to enable passage of a supply conduit (100) or such as to directly allow passage of said fluid (200) in an operative use condition of said tap (1).

5. The tap (1) according to any one of the preceding claims, wherein said command means (20) comprise a cartridge body (22) operatively associated to a control handle (21) and arranged at least partially in the cavity (35) of said cladding element (30) so as to enable opening/closing and/or selecting the passage of said fluid (200) from the first end (11) to the second end (12) of said dispensing body (10) in an operative use configuration of said tap (1).

6. The tap (1) according to any one of the preceding claims, wherein said cladding element (30) comprises an external surface (32a) exhibiting a graphic motif and/or a cladding material having predetermined characteristics of colour and/or finishing.

## Patentansprüche

1. Wasserhahn (1) für Sanitäreinrichtungen (300), umfassend:
- einen Abgabekörper (10), der mit einem ersten Ende (11) proximal in Bezug auf eine Versorgungsleitung (100) versehen ist und dazu geeignet ist, eine Fluidverbindung (200) damit bereitzustellen, und einem zweiten Ende (12) distal in Bezug auf die Versorgungsleitung (100) und so konfiguriert ist, dass ein Auslass des Fluids (200) bereitgestellt wird, und wobei das zweite Ende (12) in Fluidverbindung mit dem ersten Ende (11) steht,
- Befehlsmittel (20), die mit dem Abgabekörper (10) wirksam verbunden sind und so konfiguriert sind, dass sie den Durchgang des Fluids (200) vom
ersten Ende (11) zum zweiten Ende (12) des Abgabekörpers (10) öffnen/schließen;
- ein Verkleidungselement (30), das mit dem Abgabekörper (10) wirksam verbunden ist und vom Abgabekörper (10) reversibel abnehmbar ist, wobei ein erster Abschnitt (31) des Verkleidungselements (30) geeignet ist, dem Abgabekörper (10) gegenüberzustehen, vorzugsweise mindestens teilweise anliegend, wobei ein zweiter Abschnitt (32) so konfiguriert sind, dass ein Verbindungsabschnitt bereitgestellt wird, der sich mindestens teilweise zwischen dem ersten Ende (11) und dem zweiten Ende (12) des Abgabekörpers (10) erstreckt;
- Eingriffsmittel (40), um eine reversible Verbindung zwischen dem Verkleidungselement (30) und dem Abgabekörper (10) zu ermöglichen, und umgekehrt in eine operative Gebrauchskonfiguration des Wasserhahns (1), wobei das Verkleidungselement (30) sich zwischen einem Kopfende (33) und einem Basisende (34) erstreckt und wobei das Verkleidungselement (30) einen inneren Hohlraum (35) aufweist, der in der Lage ist, den Abgabekörper (10) in einer Betriebskonfiguration des Wasserhahns (1) mindestens teilweise aufzunehmen; wobei der Hohlraum (35) eine Oberfläche (35a) aufweist, die mit einer entsprechenden Oberfläche (11a) des ersten Endes (11) des Abgabeelements (10) wirksam verbunden ist und wobei das Verkleidungselement (30) eine Anschlagfläche (34a) des Basisendes (34) aufweist, die zum Anliegen an eine Oberfläche (310) einer Sanitäreinrichtung (300) geeignet ist;
**dadurch gekennzeichnet, dass** die Eingriffsmittel (40) eine im Abgabekörper (10) eingeschraubte Gewinde- oder mit einem Ansatz versehene Stange und eine auf die Gewindestange aufschraubbare Gewindescheibe umfasst, um eine Gegenkraft auf die Sanitäreinrichtung (300) auszuüben, um einen Druck bereitzustellen und die Verbindung zwischen dem Abgabekörper (10) und dem Verkleidungselement (30) aufrechtzuerhalten.

2. Wasserhahn (1) nach Anspruch 1, wobei der Hohlraum (35) nach außen (400) jeweils am Basisende (34) und dem Kopfende (33) des Verkleidungselements (30) offen ist, um entsprechende Durchgänge des Hohlraums (35) durch das Verkleidungselement (30) bereitzustellen.

3. Wasserhahn (1) nach Anspruch 1, wobei der Hohlraum (35) des Verkleidungselements (30) nach außen (400) in einem Bereich zwischen dem Basisende (34) und dem Kopfende (33) offen ist, wobei der Hohlraum (35) vorzugsweise eine Öffnung nach außen (400) mit einer Breite gleich einer Breite ("L") des Abgabekörpers (10) aufweist und sich vorzugsweise vom Kopfende (33) zum Basisende (34) des Verkleidungselements (30) erstreckt.

4. Wasserhahn (1) nach einem der vorhergehenden Ansprüche, wobei das Verkleidungselement (30) mindestens ein Durchgangsloch aufweist, das getrennt ist und mit dem inneren Hohlraum (35) nicht kommuniziert, um den Durchgang einer Versorgungsleitung (100) zu ermöglichen oder um den Durchgang des Fluids (200) in einem Betriebszustand des Hahns (1) direkt zu ermöglichen.

5. Wasserhahn (1) nach einem der vorhergehenden Ansprüche, wobei die Befehlsmittel (20) einen Kartuschenkörper (22) umfassen, der mit einem Steuergriff (21) wirksam verbunden ist und mindestens teilweise im Hohlraum (35) des Verkleidungselements (30) angeordnet ist, um das Öffnen/Schließen und/oder Auswählen des Durchgangs des Fluids (200) vom ersten Ende (11) zum zweiten Ende (12) des Abgabekörpers (10) in einer operativen Gebrauchskonfiguration des Wasserhahns (1) zu ermöglichen.

6. Wasserhahn (1) nach einem der vorhergehenden Ansprüche, wobei das Verkleidungselement (30) eine Außenfläche (32a) umfasst, die ein graphisches Motiv und/oder ein Verkleidungsmaterial mit vorbestimmten Farb- und/oder Veredelungseigenschaften aufweist.

## Revendications

1. Robinet (1) pour appareils sanitaires (300) comprenant :
- un corps de distribution (10) pourvu d'une première extrémité (11) proximale par rapport à un conduit d'alimentation (100) et adaptée pour réaliser un raccordement fluidique (200) avec celui-ci et d'une seconde extrémité (12) distale par rapport au dit conduit d'alimentation (100) et configurée de manière à réaliser une sortie dudit fluide (200) et dans lequel ladite seconde extrémité (12) est en communication fluidique avec ladite première extrémité (11),
- des moyens de commande (20) fonctionnellement associés au dit corps de distribution (10) et configurés de manière à ouvrir/fermer le passage dudit fluide (200) de
ladite première extrémité (11) à ladite seconde extrémité (12) dudit corps de distribution (10) ;
- un élément de revêtement (30) fonctionnellement associé au dit corps de distribution (10) et pouvant être retiré de façon amovible dudit corps de distribution (10) dans lequel une première partie (31) dudit élément de revêtement (30) est prévue pour faire face, de préférence, au moins se mettre en butée contre ledit corps de distribution (10) et une seconde partie (32) est configurée de manière à réaliser une partie de raccordement se prolongeant au moins entre ladite première extrémité (11) et ladite seconde extrémité (12) dudit corps de distribution (10) ;
- des moyens de mise en prise (40) de sorte à activer un raccordement réversible entre ledit élément de revêtement (30) et ledit corps de distribution (10) et vice versa dans une configuration d'utilisation fonctionnelle dudit robinet (1), dans lequel ledit élément de recouvrement (30) étant tel qu'il se prolonge entre une extrémité de tête (33) et une extrémité de base (34) et dans lequel ledit élément de recouvrement (30) présente une cavité interne (35) pouvant au moins partiellement recevoir ledit corps de distribution (10) dans une configuration d'utilisation fonctionnelle dudit robinet (1) ; ladite cavité (35) présentant une surface (35a) fonctionnellement associée à une surface (11a) respective de ladite première extrémité (11) dudit élément de distribution (10) et dans lequel ledit élément de revêtement (30) présente une surface de butée (34a) de ladite extrémité de base (34) pouvant se mettre en butée contre une surface (310) de l'appareil sanitaire (300) ;
**caractérisé en ce que** les moyens de mise en prise (40) comprennent une barre filetée ou cloutée vissée dans le corps de distribution (10) et une rondelle filetée pouvant se visser sur la barre filetée pour exercer une force d'opposition sur l'appareil sanitaire (300) pour réaliser une pression et maintenir l'accouplement entre le corps de distribution (10) et l'élément de revêtement (30).

2. Robinet (1) selon la revendication 1, dans lequel ladite cavité (35) est ouverte vers l'extérieur (400) respectivement en correspondance de ladite extrémité de base (34) et de ladite extrémité de tête (33) de l'élément de revêtement (30) de manière à réaliser des passages respectifs de ladite cavité (35) à travers l'élément de recouvrement (30).

3. Robinet (1) selon la revendication 1, dans lequel ladite cavité (35) de l'élément de recouvrement (30) est ouverte vers l'extérieur (400) dans une zone comprise entre ladite extrémité de base (34) et ladite extrémité de tête (33), ladite cavité (35) présentant de préférence une ouverture vers l'extérieur (400) comportant une largeur égale à une largeur (« L ») dudit corps de distribution (10) et se prolongeant de préférence de ladite extrémité de tête (33) vers ladite extrémité de base (34) de l'élément de revêtement (30).

4. Robinet (1) selon l'une quelconque des revendications précédentes, dans lequel ledit élément de revêtement (30) présente au moins un trou passant étant séparé et ne communiquant pas avec ladite cavité interne (35) de sorte à permettre le passage d'un conduit d'alimentation (100) ou de sorte à permettre directement le passage dudit fluide (200) dans une condition d'utilisation fonctionnelle dudit robinet (1) .

5. Robinet (1) selon l'une quelconque des revendications précédentes, dans lequel lesdits moyens de commande (20) comprennent un corps de cartouche (22) fonctionnellement associé à une poignée de commande (21) et disposé au moins partiellement dans la cavité (35) dudit élément de revêtement (30) de manière à permettre l'ouverture/la fermeture et/ou la sélection du passage dudit fluide (200) de la première extrémité (11) à la seconde extrémité (12) dudit corps de distribution (10) dans une configuration d'utilisation fonctionnelle dudit robinet (1).

6. Robinet (1) selon l'une quelconque des revendications précédentes, dans lequel ledit élément de recouvrement (30) comprend une surface externe (32a) présentant un motif graphique et/ou un matériau de revêtement comportant des caractéristiques prédéterminées de couleur et/ou de finition.
